(19) Europäisches Patentamt
European Patent Office
Office européen des brevets

(11) **EP 4 586 277 A1**

(12) **EUROPEAN PATENT APPLICATION**
published in accordance with Art. 153(4) EPC

(43) Date of publication:
**16.07.2025  Bulletin 2025/29**

(21) Application number: 22957903.2

(22) Date of filing: **26.10.2022**

(51) International Patent Classification (IPC):
**G21C 7/36** (2006.01)      **G21C 17/022** (2006.01)

(52) Cooperative Patent Classification (CPC):
Y02E 30/30

(86) International application number:
**PCT/CN2022/127715**

(87) International publication number:
**WO 2024/050938 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **06.09.2022  CN 202211083771**

(71) Applicants:
• **China Nuclear Power Engineering Co., Ltd.
Shenzhen, Guangdong 518124 (CN)**
• **China General Nuclear Power Corporation
Shenzhen, Guangdong 518028 (CN)**
• **CGN Power Co., Ltd.
Shenzen, Guangdong 518028 (CN)**

(72) Inventors:
• **ZHENG, Junwei
Shenzhen, Guangdong 518124 (CN)**

• **LIU, Jikun
Shenzhen, Guangdong 518124 (CN)**
• **LIU, Hang
Shenzhen, Guangdong 518124 (CN)**
• **WANG, Zhixian
Shenzhen, Guangdong 518124 (CN)**
• **ZHANG, Guojun
Shenzhen, Guangdong 518124 (CN)**
• **CHENG, Xiongwei
Shenzhen, Guangdong 518124 (CN)**
• **YANG, Wenqing
Shenzhen, Guangdong 518124 (CN)**
• **ZHANG, Hengkai
Shenzhen, Guangdong 518124 (CN)**

(74) Representative: **Greaves Brewster LLP
Copa House
Station Road
Cheddar, Somerset BS27 3AH (GB)**

(54) **PRESSURIZED WATER REACTOR CONTROL METHOD AND DEVICE, COMPUTER DEVICE AND STORAGE MEDIUM**

(57)  Method for controlling PWR, device therefor, computer device and storage medium are provided. The method comprises: if the PWR is eligible for dilution operation, performing dilution operation on the PWR according to first dilution flow rate; continuously monitoring boron concentration of coolant in primary loop of the PWR, and continuously monitoring reciprocal of neutron count rate of the PWR through SRC of the PWR; during dilution operation, adjusting first dilution flow rate at least once according to degree of reduction of boron concentration of coolant in primary loop and reciprocal of neutron count rate; if boron concentration of coolant in primary loop meets first preset condition, stopping dilution operation; if boron concentration of coolant in primary loop meets second preset condition, selecting operation mode for controlling the PWR according to reciprocal of neutron count rate. The method can improve control efficiency of the PWR and reduce risk of accidental criticality.

EP 4 586 277 A1

if a PWR is eligible for a dilution operation, perform the dilution operation on the PWR according to a first dilution flow rate

102

continuously monitor the boron concentration of coolant in a primary loop of the PWR, and continuously monitor the reciprocal of the neutron count rate of the PWR through an SRC of the PWR

104

during the dilution operation, adjust the first dilution flow rate at least once according to the degree of reduction of the boron concentration of coolant in the primary loop and the reciprocal of the neutron count rate

106

if the boron concentration of coolant in the primary loop meets a first preset condition, stop the dilution operation, and if the boron concentration of coolant in the primary loop meets a second preset condition, select an operation mode for controlling the PWR according to the reciprocal of the neutron count rate

108

**FIG. 1**

# Description

## CROSS-REFERENCE TO RELATED APPLICATION

This application claims priority to Chinese Patent Application No. 202211083771.2, entitled "METHOD FOR CONTROLLING PRESSURIZED WATER REACTOR AND DEVICE THEREOF, COMPUTER DEVICE, AND STORAGE MEDIUM" and filed on September 6, 2022, the entire contents of which are incorporated herein by reference.

## TECHNICAL FIELD

The present application relates to the field of critical startup of pressurized water reactor (PWR) nuclear power units, and in particular, to a method for controlling a PWR and a device therefor, a computer device, a storage medium and a computer program product.

## BACKGROUND

During a dilution operation on a PWR, the reciprocal of a source range channel (SRC) neutron count rate is generally required to be manually calculated by a tester after reading the value from a monitoring system. Manual data reading and calculation processes both require a certain amount of time. After manually determining that the SRC neutron count rate drops to 0.10, a physical tester then issues a dilution stop operation instruction to an operational operator. After receiving the instruction, the operational operator operates a remote control component to stop dilution. It generally takes 2 to 5 minutes for skilled staff to complete the above operating process. Dilution continues in the above process. It is estimated according to a dilution flow rate of 10 $m^3 \cdot h^{-1}$ that an amount of dilution water for 2 minutes is about 0.333 $m^3$ and an amount of dilution water for 5 minutes is approximately 0.833 $m^3$. According to practical experience, after dilution is stopped and the boron concentration of coolant in a primary loop is homogeneous, the reciprocal of the SRC neutron count rate will drop to 0.04 to 0.07. When the reactor tends to be critical, a neutron fluence rate changes exponentially. Once the tester makes a mistake in determining a time point to stop dilution, especially if there is a delay relative to the time point when dilution should be stopped, it is likely to cause the reactor to be accidentally critical in the dilution process, or to be accidentally critical in the process of making the boron concentration of the coolant in the primary loop homogeneous after the dilution is stopped.

A traditional method for manually calculating the reciprocal of the SRC neutron count rate to determine the time point to stop dilution has a time lag defect and may cause excessive dilution, leading to events such as accidental criticality of the reactor and an excessively short neutron fluence rate doubling period and problems of low control efficiency of the PWR and relatively high risk of accidental criticality.

## SUMMARY

Based on this, there is a need to provide, with respect to the above technical problems, a method for controlling a PWR and a device therefor, a computer device, a computer-readable storage medium and a computer program product that can improve control efficiency of the PWR and reduce risk of accidental criticality.

In a first aspect, the present application provides a method for controlling a PWR. The method includes:

if the PWR is eligible for a dilution operation, performing the dilution operation on the PWR according to a first dilution flow rate;

continuously monitoring a boron concentration of a coolant in a primary loop of the PWR, and continuously monitoring a reciprocal of a neutron count rate of the PWR through an SRC of the PWR;

during the dilution operation, adjusting the first dilution flow rate at least once according to degree of reduction of the boron concentration of the coolant in the primary loop and the reciprocal of the neutron count rate; and

if the boron concentration of the coolant in the primary loop meets a first preset condition, stopping the dilution operation; and if the boron concentration of the coolant in the primary loop meets a second preset condition, selecting an operation mode for controlling the PWR according to the reciprocal of the neutron count rate.

In an embodiment, the continuously monitoring the reciprocal of the neutron count rate of the PWR through the SRC of the PWR includes:

when the boron concentration of the coolant in the primary loop is greater than a reference concentration threshold, acquiring a first reference neutron count rate through the SRC of the PWR; and continuously monitoring a real-time neutron count rate of the PWR through the SRC of the PWR, and continuously calculating the reciprocal of the neutron count rate according to the real-time neutron count rate and the first reference neutron count rate; and

when the boron concentration of the coolant in the primary loop is no greater than the reference concentration threshold, stopping the dilution operation, and acquiring a second reference neutron count rate through the SRC of the PWR; and continuing the dilution operation, continuously monitoring the real-time neutron count rate of the PWR through the SRC of the PWR, and continuously calculating the reciprocal of the neutron count rate according to the real-time neutron count rate and the second reference neutron count rate.

In an embodiment, the during the dilution operation, adjusting the first dilution flow rate at least once according to the degree of reduction of the boron concentration of the coolant in the primary loop and the reciprocal of the neutron count rate includes:

if the boron concentration of the coolant in the primary loop drops to a first concentration threshold, reducing the first dilution flow rate to obtain a second dilution flow rate; and
if the reciprocal of the neutron count rate is no less than a first reciprocal threshold, continuing the dilution operation on the PWR according to the second dilution flow rate.

In an embodiment, the method further includes:

if the reciprocal of the neutron count rate is less than the first reciprocal threshold, continuing the dilution operation on the PWR according to the second dilution flow rate, and continuously acquiring the reciprocal of the neutron count rate;
if the reciprocal of the neutron count rate is no greater than a second reciprocal threshold, reducing the second dilution flow rate to obtain a third dilution flow rate, the second reciprocal threshold being less than the first reciprocal threshold; and
continuing the dilution operation on the PWR according to the third dilution flow rate.

In an embodiment, the if the boron concentration of the coolant in the primary loop meets the first preset condition, stopping the dilution operation, and if the boron concentration of the coolant in the primary loop meets the second preset condition, selecting the operation mode for controlling the PWR according to the reciprocal of the neutron count rate includes:

if a difference between the boron concentration of the coolant in the primary loop and a theoretical critical boron concentration of the PWR is no greater than a second concentration threshold, stopping the dilution operation;
waiting for the boron concentration of the coolant in the primary loop to be homogeneous, and if an amplitude of change of the boron concentration of the coolant in the primary loop within a preset time period is no greater than an amplitude threshold, determining according to the reciprocal of the neutron count rate whether the PWR reaches a critical state; and
if the PWR reaches the critical state, controlling a temperature control rod to stabilize a neutron fluence rate of a core of the PWR.

In an embodiment, the method further includes:
if the reciprocal of the neutron count rate is no greater than a third reciprocal threshold, stopping the dilution operation, the third reciprocal threshold being less than the second reciprocal threshold.

In an embodiment, the determining according to the reciprocal of the neutron count rate whether the PWR reaches the critical state includes:

if the reciprocal of the neutron count rate is less than a fourth reciprocal threshold, determining that the PWR reaches the critical state; and
if the reciprocal of the neutron count rate is no less than the fourth reciprocal threshold, determining that the PWR does not reach the critical state; and
the fourth reciprocal threshold being less than a third reciprocal threshold.

In an embodiment, the method further includes:

if the PWR does not reach the critical state, lifting the temperature control rod towards a top position in the core at least once, with a preset number of steps each time;
during the lifting of the temperature control rod, continuously determining according to the reciprocal of the neutron count rate whether the PWR reaches the critical state during the lifting of the temperature control rod; and
if the PWR reaches the critical state during the lifting of the temperature control rod, controlling the temperature control rod to stabilize the neutron fluence rate of the core of the PWR.

In an embodiment, the method further includes:

if the PWR does not reach the critical state during the lifting of the temperature control rod, controlling the temperature control rod to be inserted down to a theoretical critical rod position; and
performing a supplementary dilution operation on the PWR by using a preset volume of deionized water, and going back to the step of waiting for the boron concentration of the coolant in the primary loop to be homogeneous.

In a second aspect, the present application provides a device for controlling a PWR. The device includes:

a dilution module configured to: if the PWR is eligible for a dilution operation, perform the dilution operation on the PWR according to a first dilution flow rate;
a monitoring module configured to: continuously monitor a boron concentration of a coolant in a primary loop of the PWR, and continuously monitor a reciprocal of a neutron count rate of the PWR through an SRC of the PWR;
an adjustment module configured to: during the dilution operation, adjust the first dilution flow rate at least once according to degree of reduction of the boron concentration of the coolant in the primary loop and the reciprocal of the neutron count rate; and a control module configured to: if the boron concentration of the coolant in the primary loop meets a first preset condition, stop the dilution operation; and if the boron concentration of the coolant in the primary loop meets a second preset condition, select an operation mode for controlling the PWR according to the reciprocal of the neutron count rate.

In a third aspect, the present application further provides a computer device. The computer device includes a memory and a processor, the memory storing a computer program, and the processor, when executing the computer program, implements the following steps:

if a PWR is eligible for a dilution operation, performing the dilution operation on the PWR according to a first dilution flow rate;
continuously monitoring a boron concentration of a coolant in a primary loop of the PWR, and continuously monitoring a reciprocal of a neutron count rate of the PWR through an SRC of the PWR;
during the dilution operation, adjusting the first dilution flow rate at least once according to degree of reduction of the boron concentration of the coolant in the primary loop and the reciprocal of the neutron count rate; and
if the boron concentration of the coolant in the primary loop meets a first preset condition, stopping the dilution operation, and if the boron concentration of the coolant in the primary loop meets a second preset condition, selecting an operation mode for controlling the PWR according to the reciprocal of the neutron count rate.

In a fourth aspect, the present application further provides a computer-readable storage medium. The computer-readable storage medium has a computer program stored thereon, where the computer program, when executed by a processor, implements the following steps:

if a PWR is eligible for a dilution operation, performing the dilution operation on the PWR according to a first dilution flow rate;
continuously monitoring a boron concentration of a coolant in a primary loop of the PWR, and continuously monitoring a reciprocal of a neutron count rate of the PWR through an SRC of the PWR;
during the dilution operation, adjusting the first dilution flow rate at least once according to degree of reduction of the boron concentration of the coolant in the primary loop and the reciprocal of the neutron count rate; and
if the boron concentration of the coolant in the primary loop meets a first preset condition, stopping the dilution operation, and if the boron concentration of the coolant in the primary loop meets a second preset condition, selecting an operation mode for controlling the PWR according to the reciprocal of the neutron count rate.

In a fifth aspect, the present application further provides a computer program product. The computer program product includes a computer program, where the computer program, when executed by a processor, implements the following steps:

if a PWR is eligible for a dilution operation, performing the dilution operation on the PWR according to a first dilution flow rate;
continuously monitoring a boron concentration of a coolant in a primary loop of the PWR, and continuously monitoring a reciprocal of a neutron count rate of the PWR through an SRC of the PWR;
during the dilution operation, adjusting the first dilution flow rate at least once according to degree of reduction of the boron concentration of the coolant in the primary loop and the reciprocal of the neutron count rate; and
if the boron concentration of the coolant in the primary loop meets a first preset condition, stopping the dilution operation, and if the boron concentration of the coolant in the primary loop meets a second preset condition, selecting an operation mode for controlling the PWR according to the reciprocal of the neutron count rate.

According to the method for controlling the PWR and the device therefor, the computer device, the storage medium, and the computer program product above, if the PWR is eligible for dilution operation, the dilution operation is performed on the PWR according to the first dilution flow rate; the boron concentration of the coolant in the primary loop of the PWR is continuously monitored, and the reciprocal of the neutron count rate of the PWR is continuously monitored through the SRC of the PWR; during the dilution operation, the first dilution flow rate is adjusted at least once according to the degree of reduction of the boron concentration of the coolant in the primary loop and the reciprocal of the neutron count rate; and if the boron concentration of the coolant in the primary loop meets the first preset condition, the dilution operation is stopped, and if the boron concentration of the coolant in the primary loop meets the second preset condition, the operation mode for controlling the PWR is selected according to the reciprocal of the neutron count rate. By automatically monitoring the boron concentration of the coolant in the primary loop and the reciprocal of the neutron count rate of the PWR, adjusting the flow rate of the dilution operation, and automatically performing corresponding operations when the PWR is critical, efficiency in controlling the PWR can be improved, and the risk of accidental criticality can be reduced.

## BRIEF DESCRIPTION OF THE DRAWINGS

In order to more clearly illustrate the technical solutions in embodiments of the present application, the accompanying drawings used in the description of the embodiments will be briefly introduced below. It is apparent that the accompanying drawings in the following description are only for some embodiments of the present application, and other drawings can be obtained by those of ordinary skill in the art from the provided drawings without creative efforts.

FIG. 1 is a schematic flowchart of a method for controlling a PWR according to an embodiment;
FIG. 2 is a schematic flowchart of a method for controlling a PWR nuclear power unit according to an embodiment;
FIG. 3 is a schematic structural diagram of a system for controlling a PWR according to an embodiment;
FIG. 4 is a structural block diagram of a device for controlling a PWR according to an embodiment; and
FIG. 5 is a diagram of an internal structure of a computer device according to an embodiment.

## DETAILED DESCRIPTION

In order to make objectives, technical solutions and advantages of the present application clearer and more understandable, the present application is described in further detail below based on embodiments with reference to the drawings. It should be understood that specific embodiments described herein are intended only to interpret the present application rather than to limit the present application.

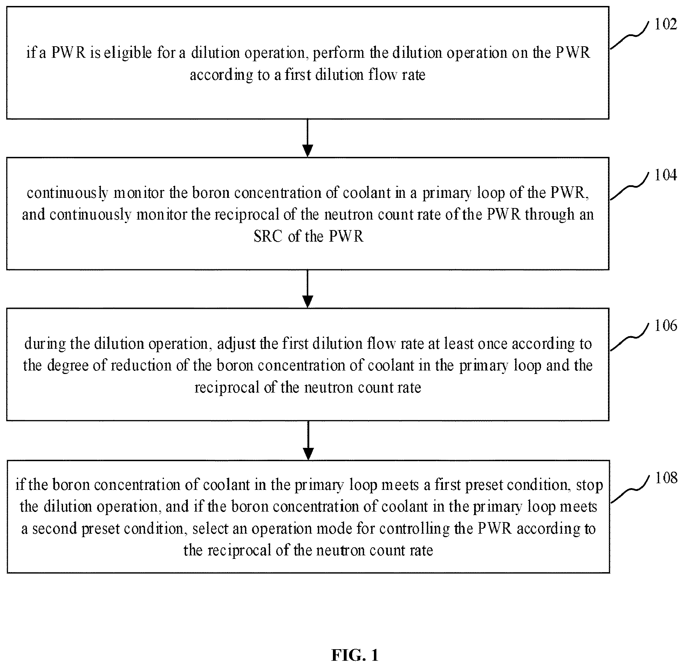

As shown in FIG. 1, a method for controlling a pressurized water reactor (PWR) is provided according to an embodiment. In the embodiment, it is exemplarily illustrated based on a case that the method is applied to a computer device. It may be understood that the computer device may specifically be a terminal or a server. The terminal may be, but is not limited to, various industrial computers. The server may be implemented as a standalone server or a server cluster including multiple servers. In the embodiment, the method includes the following steps.

In step 102, in a case that the PWR is eligible for a dilution operation, the dilution operation is performed on the PWR according to a first dilution flow rate.

Optionally, it is determined whether a PWR which is about to undergo critical startup is eligible for a dilution operation by checking a pressure, a temperature, and a boron concentration of a coolant in a primary loop of the PWR. It is possible to start performing the dilution operation on the PWR only in the case that the PWR is eligible for the dilution operation.

Specifically, prior to start of a criticality operation, the PWR should be adjusted to a standard hot shutdown condition; an average temperature of the coolant in the primary loop of the PWR ranges from 289.4°C to 294.4°C, with a fluctuation range meeting a requirement for critical startup parameters; the pressure of the coolant in the primary loop of the PWR is 15.4 MPa, with a fluctuation range meeting the requirement for critical startup parameters; and the boron concentration of the coolant in the primary loop of the PWR meets the requirement for critical startup parameters. In this case, it is determined that the PWR is eligible for the dilution operation, and the dilution operation may be performed on the PWR according to the first dilution flow rate. The first dilution flow rate may be 27 $m^3 \cdot h^{-1}$.

In a feasible implementation, prior to the dilution operation, in case that the PWR is eligible for the dilution operation, there is also a need to adjust a control rod assembly to a target height position according to a critical startup program. One time of manual shutdown test is performed to verify availability of a PWR shutdown protection system. Critical startup can be performed only after the test is passed. After it is checked and confirmed that the PWR is eligible for the critical startup, the control rod assembly is readjusted to the target height position according to the critical startup program. After a wait for the source range channel (SRC) neutron count rate to stabilize, the SRC neutron count rate is recorded as $N_p$, and $N_p$ is taken as a reference neutron count rate before the boron concentration of the coolant in the primary loop drops to 2200 $mg \cdot kg^{-1}$ (that is, $N_p$ is selected as the reference neutron count rate). Pressure control of a pressurizer is set to an automatic control mode, and an electric heater of the pressurizer is put into operation as much as possible. Any two of three letdown orifice plates of a chemical and volume control system are opened. A trend tracking monitoring chart of the boron concentration of the coolant in the primary loop and the reciprocal of the SRC neutron count rate of the PWR is established. The boron concentration of the coolant in the primary loop is derived from a boron meter monitoring signal of a nuclear sampling system.

In step 104, the boron concentration of the coolant in the primary loop of the PWR is continuously monitored, and the reciprocal of the neutron count rate of the PWR is continuously monitored through an SRC of the PWR.

Optionally, the boron concentration of the coolant in the primary loop of the PWR is continuously monitored, a real-time neutron count rate of the PWR is continuously monitored through the SRC of the PWR, and the reciprocal of the neutron count rate of the PWR is calculated in real time according to a currently selected reference neutron count rate. A specific calculation formula is:

$$N_r = N_b / N_t$$

where $N_r$ denotes the reciprocal of the SRC neutron count rate; $N_b$ denotes the reference neutron count rate,

and $N_t$ denotes a real-time neutron count rate measured by the SRC at moment t after the start of the criticality operation (i.e., the dilution operation).

In step 106, during the dilution operation, the first dilution flow rate is adjusted at least once according to the degree of reduction of the boron concentration of the coolant in the primary loop and the reciprocal of the neutron count rate.

Optionally, during the dilution operation according to the first dilution flow rate, the boron concentration of the coolant in the primary loop is continuously monitored. The boron concentration of the coolant in the primary loop is constantly changing, and generally, the boron concentration of the coolant in the primary loop continuously drops. When the boron concentration of the coolant in the primary loop drops to a first concentration threshold, the first dilution flow rate is required to be reduced to obtain a second dilution flow rate. If the reciprocal of the SRC neutron count rate is no less than a first reciprocal threshold, the dilution operation is continued on the PWR according to the second dilution flow rate until the dilution operation is stopped. If the reciprocal of the SRC neutron count rate is less than the first reciprocal threshold, the dilution operation is continued on the PWR according to the second dilution flow rate, and the reciprocal of the SRC neutron count rate is continuously acquired; when the reciprocal of the SRC neutron count rate is no greater than a second reciprocal threshold, the second dilution flow rate is reduced to obtain a third dilution flow rate, and the dilution operation is continued on the PWR according to the third dilution flow rate until the dilution operation is stopped. This is because under same boron concentration, a greater SRC neutron count rate indicates a smaller reciprocal of the SRC neutron count rate and higher activity of startup neutron source. The greater the activity of startup neutron source is, the higher a risk of accidental criticality in continuing the dilution operation at an initial dilution flow rate is. Therefore, adjusting the dilution flow rate according to the reciprocal of the SRC neutron count rate can distinguish startup neutron source activities to perform the dilution operation, effectively preventing the risk of accidental criticality caused by excessive activity of startup neutron source.

In step 108, if the boron concentration of the coolant in the primary loop meets a first preset condition, the dilution operation is stopped, and if the boron concentration of the coolant in the primary loop meets a second preset condition, an operation mode for controlling the PWR is selected according to the reciprocal of the SRC neutron count rate.

Optionally, when the boron concentration of the coolant in the primary loop drops to a certain degree, the dilution operation is stopped, wait for a period of time and after the boron concentration of the coolant in the primary loop is homogeneous, the reciprocal of a current SRC neutron count rate is acquired, whether the PWR reaches a critical state is determined according to the reciprocal of the SRC neutron count rate, and a subsequent execution operation is selected based on a current state of the PWR (reach the critical state or not reach the critical state).

In the method for controlling the PWR, if the PWR is eligible for dilution operation, the dilution operation is performed on the PWR according to the first dilution flow rate; the boron concentration of the coolant in the primary loop of the PWR is continuously monitored, and the reciprocal of the neutron count rate of the PWR is continuously monitored through the SRC of the PWR; during the dilution operation, the first dilution flow rate is adjusted at least once according to the degree of reduction of the boron concentration of the coolant in the primary loop and the reciprocal of the SRC neutron count rate; and if the boron concentration of the coolant in the primary loop meets the first preset condition, the dilution operation is stopped, and if the boron concentration of the coolant in the primary loop meets the second preset condition, the operation mode for controlling the PWR is selected according to the reciprocal of the SRC neutron count rate. By automatically monitoring the boron concentration of the coolant in the primary loop and the reciprocal of the SRC neutron count rate of the PWR, adjusting the flow rate of the dilution operation, and automatically performing corresponding operations when the PWR is critical, efficiency in controlling the PWR can be improved, and the risk of accidental criticality can be reduced.

In an embodiment, the continuously monitoring the reciprocal of the neutron count rate of the PWR through the SRC of the PWR includes: when the boron concentration of the coolant in the primary loop is greater than a reference concentration threshold, acquiring a first reference neutron count rate through the SRC of the PWR; and continuously monitoring a real-time neutron count rate of the PWR through the SRC of the PWR, and continuously calculating the reciprocal of the neutron count rate according to the real-time neutron count rate and the first reference neutron count rate; and when the boron concentration of the coolant in the primary loop is no greater than the reference concentration threshold, stopping the dilution operation, and acquiring a second reference neutron count rate through the SRC of the PWR; and continuing the dilution operation, continuously monitoring the real-time neutron count rate of the PWR through the SRC of the PWR, and continuously calculating the reciprocal of the neutron count rate according to the real-time neutron count rate and the second reference neutron count rate.

The reference concentration threshold may be configured as 2200 mg·kg$^{-1}$.

Optionally, after it is checked and confirmed that the PWR is eligible for critical startup, the control rod assembly is readjusted to the target height position according to the critical startup program. Generally, prior to the dilution operation, the boron concentration of the coolant in the primary loop is greater than the reference concentration threshold, after a wait for the SRC neutron count rate to stabilize, the SRC neutron count rate is

recorded as $N_p$, and $N_p$ is taken as a first reference neutron count rate before the boron concentration of the coolant in the primary loop drops to 2200 mg·kg$^{-1}$. After the dilution operation is started, when the boron concentration of the coolant in the primary loop drops to 2200 mg·kg$^{-1}$, the dilution operation is stopped. After a wait for the SRC neutron count rate to stabilize, the SRC neutron count rate in this case is recorded as a second reference neutron count rate when the PWR tends to be critical, which is denoted as $N_b$.

In the embodiment, different reference neutron count rates are selected according to different boron concentrations of the coolant in the primary loop, which can ensure that the reciprocals of SRC neutron count rates calculated continuously are more accurate.

In an embodiment, the during the dilution operation, adjusting the first dilution flow rate at least once according to the degree of reduction of the boron concentration of the coolant in the primary loop and the reciprocal of the SRC neutron count rate includes: if the boron concentration of the coolant in the primary loop drops to a first concentration threshold, reducing the first dilution flow rate to obtain a second dilution flow rate; and if the reciprocal of the SRC neutron count rate is no less than a first reciprocal threshold, continuing the dilution operation on the PWR according to the second dilution flow rate. If the reciprocal of the SRC neutron count rate is less than the first reciprocal threshold, the dilution operation is continued on the PWR according to the second dilution flow rate, and the reciprocal of the SRC neutron count rate is continuously acquired; if the reciprocal of the SRC neutron count rate is no greater than a second reciprocal threshold, the second dilution flow rate is reduced to obtain a third dilution flow rate, the second reciprocal threshold being less than the first reciprocal threshold; and the dilution operation is continued on the PWR according to the third dilution flow rate.

The first dilution flow rate may be configured as 27 m$^3$·h$^{-1}$, the second dilution flow rate may be configured as 10 m$^3$·h$^{-1}$, the third dilution flow rate may be configured as 5 m$^3$·h$^{-1}$, the first concentration threshold may be configured as 1300 mg·kg$^{-1}$, the first reciprocal threshold may be configured as 0.2, and the second reciprocal threshold may be configured as 0.15.

Optionally, the dilution operation is continued at a flow rate of 27 m$^3$·h$^{-1}$, and there is a need to observe a changing trend of the reciprocal of the SRC neutron count rate during the dilution operation. When the boron concentration of the coolant in the primary loop drops to 1300 mg·kg$^{-1}$, dilution is continued after the dilution flow rate is adjusted to 10 m$^3$·h$^{-1}$. In this process, if the reciprocal of the SRC neutron count rate drops to a value less than 0.1, the dilution operation is required to be stopped immediately. The reactor is adjusted to tend to a critical state through dilution. A criterion is that the reciprocal of the SRC neutron count rate drops to a value less than or equal to 0.1, or a difference between the boron concentration of the coolant in the primary loop and a theoretical critical boron concentration when a temperature control rod is at a theoretical critical rod position does not exceed 30 mg·kg$^{-1}$. If the reciprocal of the corresponding SRC neutron count rate when the boron concentration of the coolant in the primary loop drops to 1300 mg·kg$^{-1}$ is less than 0.2, the dilution is continued at a flow rate of 10 m$^3$·h$^{-1}$ until the reciprocal of the SRC neutron count rate drops to 0.15, and then the dilution flow rate is reduced to 5 m$^3$·h$^{-1}$ to continue the dilution. The step is suitable for critical startup of PWR nuclear power units with high neutron source activity.

In the embodiment, if the boron concentration of the coolant in the primary loop drops to the first concentration threshold, the first dilution flow rate is reduced to obtain the second dilution flow rate; and if the reciprocal of the SRC neutron count rate is no less than the first reciprocal threshold, the dilution operation is continued on the PWR according to the second dilution flow rate. If the reciprocal of the SRC neutron count rate is less than the first reciprocal threshold, the dilution operation is continued on the PWR according to the second dilution flow rate, and the reciprocal of the SRC neutron count rate is continuously acquired; if the reciprocal of the SRC neutron count rate is no greater than the second reciprocal threshold, the second dilution flow rate is reduced to obtain the third dilution flow rate, the second reciprocal threshold being less than the first reciprocal threshold; and the dilution operation is continued on the PWR according to the third dilution flow rate. The dilution flow rate is adjusted according to the reciprocal of the SRC neutron count rate, which can distinguish activities of startup neutron source to perform the dilution operation, effectively preventing the risk of accidental criticality caused by excessive activity of startup neutron source.

In an embodiment, the method further includes: if the reciprocal of the SRC neutron count rate is no greater than a third reciprocal threshold, stopping the dilution operation; where the third reciprocal threshold is less than the second reciprocal threshold.

The third reciprocal threshold may be configured as 0.1.

Optionally, during the entire dilution operation, if the reciprocal of the SRC neutron count rate drops to a value less than or equal to 0.1, the dilution operation is required to be stopped immediately. This is because when the reciprocal of the SRC neutron count rate drops to the value less than or equal to 0.1, the SRC neutron count rate is close to a neutron count rate when the PWR is critical. The SRC neutron count rate increases exponentially as the boron concentration of the coolant in the primary loop decreases. If the dilution operation is continued, the SRC neutron count rate may increase faster and faster while the boron concentration of the coolant in the primary loop decreases by a same amount, and there is a high risk of accidental criticality if the dilution operation is continued. Therefore, the dilution operation is required to be stopped immediately.

In the embodiment, the dilution flow rate is adjusted according to the reciprocal of the SRC neutron count rate, which can distinguish activities of startup neutron source to perform the dilution operation, effectively preventing the risk of accidental criticality caused by excessive activity of startup neutron source.

In an embodiment, the if the boron concentration of the coolant in the primary loop meets the first preset condition, stopping the dilution operation; and if the boron concentration of the coolant in the primary loop meets the second preset condition, selecting the operation mode for controlling the PWR according to the reciprocal of the SRC neutron count rate includes: if a difference between the boron concentration of the coolant in the primary loop and the theoretical critical boron concentration of the PWR is no greater than a second concentration threshold, stopping the dilution operation; and waiting for the boron concentration of the coolant in the primary loop to be homogeneous, and if an amplitude of change of the boron concentration of the coolant in the primary loop within a preset time period is no greater than an amplitude threshold, determining according to the reciprocal of the SRC neutron count rate whether the PWR reaches the critical state.

In one case, if the reciprocal of the SRC neutron count rate is less than a fourth reciprocal threshold, it is determined that the PWR reaches the critical state; and a temperature control rod is controlled to stabilize neutron fluence rate of a core of the PWR.

In another case, if the reciprocal of the SRC neutron count rate is no less than the fourth reciprocal threshold, it is determined that the PWR does not reach the critical state, the fourth reciprocal threshold being less than the third reciprocal threshold. If the PWR does not reach the critical state, the temperature control rod is lifted toward a top position in the core at least once, with a preset number of steps each time. During the lifting of the temperature control rod, it is continuously determined according to the reciprocal of the SRC neutron count rate whether the PWR reaches the critical state during the lifting of the temperature control rod. If the PWR reaches the critical state during the lifting of the temperature control rod, the temperature control rod is controlled to stabilize the neutron fluence rate of the core of the PWR. If the PWR does not reach the critical state during the lifting of the temperature control rod, the temperature control rod is controlled to be inserted down to a theoretical critical rod position. A supplementary dilution operation is performed on the PWR by using a preset volume of deionized water, and the method goes back to the step of waiting for the boron concentration of the coolant in the primary loop to be homogeneous.

The second concentration threshold may be configured as 30 mg·kg$^{-1}$, and the theoretical critical boron concentration is determined based on a current nuclear fuel loading scheme for PWR.

Optionally, there is a need to observe a changing trend of the reciprocal of the SRC neutron count rate during the dilution operation, and when the reciprocal of the SRC neutron count rate drops to a value less than or equal to 0.1, the dilution operation is stopped; and when the difference between the boron concentration of the coolant in the primary loop and the theoretical critical boron concentration when the temperature control rod is at the theoretical critical rod position does not exceed 30 mg·kg$^{-1}$, the dilution operation is stopped. The boron concentration of the coolant in the primary loop is waited to become homogeneous, and the waiting time is no less than 15 minutes. After the boron concentration of the coolant in the primary loop monitored by a boron meter is stable (amplitude of change within 5 minutes does not exceed 10 mg·kg$^{-1}$), chemical sampling and analysis is conducted on the coolant in the primary loop and the coolant in the pressurizer twice at an interval of 5 minutes. When a difference between chemical sampling analysis results of the boron concentration of the coolant in the primary loop and the boron concentration of the coolant in the pressurizer does not exceed 20 mg·kg$^{-1}$, it is determined according to the reciprocal of the SRC neutron count rate whether the PWR reaches the critical state. When the reciprocal of the SRC neutron count rate is very small and close to 0, neutron doubling cycle of the core of the PWR is infinite, and the PWR is considered to have reached the critical state. A specific determination threshold may be, but is not limited to, 0.01.

Further, after the boron concentration of the coolant in the primary loop is homogeneous, if the reactor does not reach the critical state, an operation of lifting the temperature control rod to make the reactor critical is to be performed. The reactor approaches the critical state in a manner of lifting the temperature control rod by no more than 5 steps each time. A wait for no less than 100 seconds is required after each lifting of the temperature control rod. In this process, there is a need to pay close attention to a monitoring value of the neutron doubling cycle of the core. When the neutron doubling cycle of the core reaches a relatively stable monitoring value in a range of 100 to 300 seconds, it is determined that the reactor has reached a slightly supercritical state. In this case, the neutron fluence rate of the core should be stabilized by inserting down the temperature control rod (1 step per time is recommended) to adjust the reactor to the critical state. If the reactor still has not reached the critical state after the temperature control rod is lifted to the top position in the core, the temperature control rod is inserted down to the theoretical critical rod position, and after 1 m$^3$ of deionized water is added for dilution, the step "waiting for the boron concentration of the coolant in the primary loop to be homogeneous, and determining according to the reciprocal of the SRC neutron count rate whether the PWR reaches the critical state" is repeated until the reactor reaches the critical state.

In the embodiment, if the difference between the boron concentration of the coolant in the primary loop and the theoretical critical boron concentration of the PWR is no greater than the second concentration threshold, the dilution operation is stopped; the boron concentration of the coolant in the primary loop is waited to be homogeneous, and if the amplitude of change of the boron concentration of the coolant in the primary loop within the preset time period is no greater than the amplitude threshold, it is determined according to the reciprocal of the SRC neutron count rate whether the PWR reaches the critical state. Depending on whether the PWR reaches the critical state, a subsequent operation mode for controlling the PWR is determined. The efficiency in controlling the PWR can be improved, and the risk of accidental criticality can be reduced.

In an embodiment, a method for controlling a PWR includes:

if the PWR is eligible for a dilution operation, performing the dilution operation on the PWR according to a first dilution flow rate; and
continuously monitoring a boron concentration of a coolant in a primary loop of the PWR; when the boron concentration of the coolant in the primary loop is greater than a reference concentration threshold, acquiring a first reference neutron count rate through an SRC of the PWR; and continuously monitoring a real-time neutron count rate of the PWR through the SRC of the PWR, and continuously calculating a reciprocal of the neutron count rate according to the real-time neutron count rate and the first reference neutron count rate; and when the boron concentration of the coolant in the primary loop is no greater than the reference concentration threshold, stopping the dilution operation, and acquiring a second reference neutron count rate through the SRC of the PWR; and continuing the dilution operation, continuously monitoring the real-time neutron count rate of the PWR through the SRC of the PWR, and continuously calculating the reciprocal of the neutron count rate according to the real-time neutron count rate and the second reference neutron count rate.

If the boron concentration of the coolant in the primary loop drops to a first concentration threshold, the first dilution flow rate is reduced to obtain a second dilution flow rate; and if the reciprocal of the SRC neutron count rate is no less than a first reciprocal threshold, the dilution operation is continued on the PWR according to the second dilution flow rate. If the reciprocal of the SRC neutron count rate is less than the first reciprocal threshold, the dilution operation is continued on the PWR according to the second dilution flow rate, and the reciprocal of the SRC neutron count rate is continuously acquired; if the reciprocal of the SRC neutron count rate is no greater than a second reciprocal threshold, the second dilution flow rate is reduced to obtain a third dilution flow rate, the second reciprocal threshold being less than the first reciprocal threshold; and the dilution operation is continued on the PWR according to the third dilution flow rate.

If the reciprocal of the SRC neutron count rate is no greater than a third reciprocal threshold, the dilution operation is stopped; where the third reciprocal threshold is less than the second reciprocal threshold.

If a difference between the boron concentration of the coolant in the primary loop and a theoretical critical boron concentration of the PWR is no greater than a second concentration threshold, the dilution operation is stopped; the boron concentration of the coolant in the primary loop is waited to be homogeneous, and if an amplitude of change of the boron concentration of the coolant in the primary loop within a preset time period is no greater than an amplitude threshold, it is determined according to the reciprocal of the SRC neutron count rate whether the PWR reaches a critical state; and if the reciprocal of the SRC neutron count rate is less than a fourth reciprocal threshold, it is determined that the PWR reaches the critical state, and if the PWR reaches the critical state, a temperature control rod is controlled to stabilize a neutron fluence rate of a core of the PWR. The fourth reciprocal threshold is less than the third reciprocal threshold.

If the reciprocal of the SRC neutron count rate is no less than the fourth reciprocal threshold, it is determined that the PWR does not reach the critical state. If the PWR does not reach the critical state, the temperature control rod is lifted towards a top position in a core at least once, with a preset number of steps each time. During the lifting of the temperature control rod, it is continuously determined according to the reciprocal of the SRC neutron count rate whether the PWR reaches the critical state during the lifting of the temperature control rod. If the PWR reaches the critical state during the lifting of the temperature control rod, the temperature control rod is controlled to stabilize the neutron fluence rate of the core of the PWR. If the PWR does not reach the critical state during the lifting of the temperature control rod, the temperature control rod is controlled to be inserted down to a theoretical critical rod position. A supplementary dilution operation is performed on the PWR by using a preset volume of deionized water, and the method goes back to the step of waiting for the boron concentration of the coolant in the primary loop to be homogeneous.

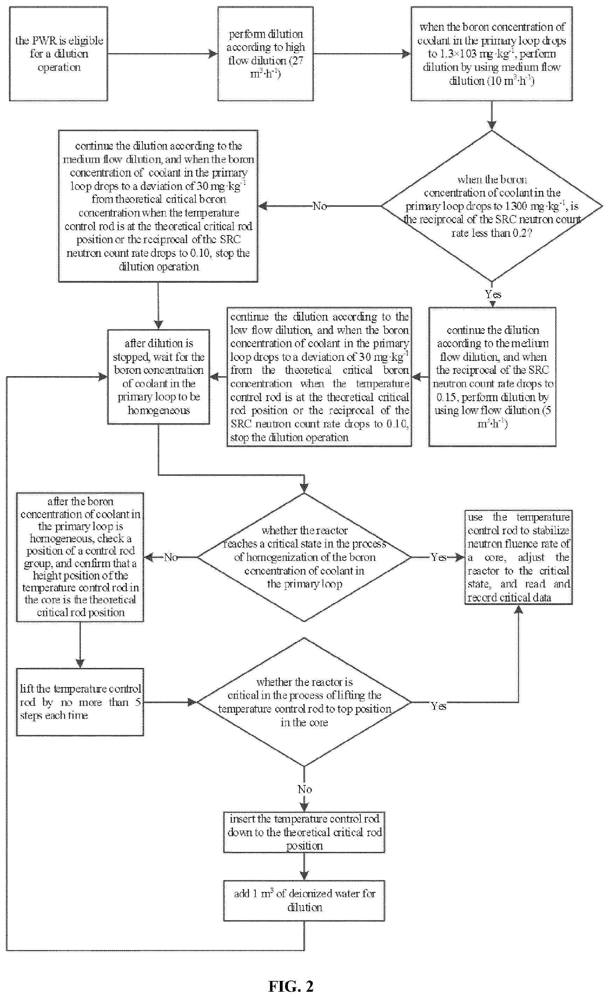

In a feasible implementation, for example, a method for controlling a PWR is applied to critical startup of a PWR nuclear power unit, including the following steps as shown in FIG. 2.

(1) It is checked that a pressure, a temperature, and a boron concentration of a coolant in a primary loop of the PWR that is about to undergo critical startup meet requirements of a critical startup program, and it is confirmed that the PWR is eligible for critical startup.

Specifically, prior to the critical startup, the PWR should be adjusted to a standard hot shutdown condition. An average temperature of the coolant in the primary loop ranges from 289.4°C to 294.4°C, with a fluctuation range meeting a requirement for critical startup parameters. A system pressure of the coolant in the primary loop is 15.4 MPa, with a fluctuation range meeting the requirement for critical startup parameters. The boron concentration of the coolant in the primary loop meets the requirement for critical startup parameters.

(2) The control rod assembly is adjusted to a target height position according to the critical startup program.

Specifically, rod groups whose shutdown control rods are numbered SA, SB, and SC are lifted to step 225; and a rod group whose shutdown control rod is numbered SD, rod groups whose power control rods are numbered G1, G2, N1, and N2, and a temperature control rod group numbered R are adjusted to step 5.

After the critical startup is started, the shutdown control rod numbered SD is first lifted to step 225, and after the neutron count rate measured by the SRC stabilizes, the neutron count rate is recorded as a reference neutron count rate during the rod lifting operation. The power control rod is put in a manual control mode, and each rod group is lifted according to a preset step-stacking scheme in order of N2, N1, G2, and G1. For every 50 steps, 2 neutron count rates measured by the SRC are recorded, and the reciprocals of the SRC neutron count rates are calculated. After the power control rod is lifted to a rod position closest to step 225, lifting amplitude is based on a value of step 225 minus an actual rod position, and the requirement of 50 steps/time is no longer complied with. After the power control rods are all lifted to step 225, the temperature control rod is manually lifted to step 130 according to 50 steps/time, during which the reciprocal of the SRC neutron count rate is required to be calculated.

(3) A manual shutdown test is performed once to verify availability of a reactor shutdown protection system. Critical startup can be performed only after the test is passed.

(4) After it is checked and confirmed that the PWR is eligible for the critical startup, the control rod assembly is readjusted to the target height position according to the critical startup program.

(5) After a wait for the SRC neutron count rate to stabilize, the SRC neutron count rate is recorded as $N_p$, and $N_p$ is taken as a reference neutron count rate before the boron concentration of the coolant in the primary loop drops to 2200 mg·kg$^{-1}$.

(6) Pressure control of a pressurizer is set to an automatic control mode, and an electric heater of the pressurizer is put into operation as much as possible.

(7) Any two of three letdown orifice plates of a chemical and volume control system are opened.

(8) A trend tracking monitoring chart of the boron concentration of the coolant in the primary loop and the reciprocal of the SRC neutron count rate of the PWR is established. The boron concentration of the coolant in the primary loop is derived from a boron meter monitoring signal of a nuclear sampling system.

(9) The dilution operation is started at a flow rate of 27 m$^3$·h$^{-1}$, there is a need to observe a changing trend of the reciprocal of the SRC neutron count rate during the dilution operation, and when the reciprocal of the SRC neutron count rate drops to a value less than or equal to 0.1, the dilution operation is required to be stopped immediately.

(10) When the boron concentration of the coolant in the primary loop drops to 2200 mg·kg$^{-1}$, the dilution operation is stopped. After a wait for the SRC neutron count rate to stabilize, the SRC neutron count rate in this case is recorded as a reference neutron count rate when the PWR tends to be critical, which is denoted as $N_b$.

(11) The dilution operation is continued at a flow rate of 27 m$^3$·h$^{-1}$, and there is a need to observe a changing trend of the reciprocal of the SRC neutron count rate during the dilution operation. When the boron concentration of the coolant in the primary loop drops to 1300 mg·kg$^{-1}$ (1300 mg·kg$^{-1}$ is a preset boron concentration threshold for adjustment from high flow dilution to medium flow dilution), the medium flow dilution is continued after the dilution flow rate is adjusted to 10 m$^3$·h$^{-1}$. In this process, if the reciprocal of the SRC neutron count rate drops to a value less than or equal to 0.1, the dilution operation is required to be stopped immediately.

(12) The reactor is adjusted to a critical state through dilution. A criterion is that the reciprocal of the SRC neutron count rate drops to a value less than or equal to 0.1, or a difference between the boron concentration of the coolant in the primary loop and a theoretical critical boron concentration when the temperature control rod is at a theoretical critical rod position does not exceed 30 mg·kg$^{-1}$. If the reciprocal of the corresponding SRC neutron count rate when the boron concentration of the coolant in the primary loop drops to 1300 mg·kg$^{-1}$ is less than 0.2, the dilution is continued at a flow rate of 10 m$^3$·h$^{-1}$ until the reciprocal of the SRC neutron count rate drops to 0.15, and then the dilution flow rate is reduced to 5 m$^3$·h$^{-1}$ to continue the dilution. The step is suitable for critical startup of PWR nuclear power units with high neutron source activity. There is a need to observe a changing trend of the reciprocal of the SRC neutron count rate during the dilution operation, and when the reciprocal of the SRC neutron count rate drops to the value less than or equal to 0.1, the dilution operation is stopped; and when the difference between the boron concentration of the coolant in the primary loop and the theoretical critical boron concentration when the temperature control rod is at the theoretical critical rod position does not exceed 30 mg·kg$^{-1}$, the dilution operation is stopped.

Specifically, in order to achieve a goal of mixing the boron concentration of the coolant in the primary loop homogeneously as quickly as possible, the electric heater of the pressurizer should be put into operation as much as possible. At the same time, a pressure control mode of the pressurizer is set to an automatic mode, and two sets of letdown orifice plates and desalination beds of the chemical and volume control system are put into operation until an absolute value of a deviation between the boron concentration of the coolant in the primary loop and the boron concentration of the coolant in the pressurizer is less than 20 mg·kg$^{-1}$. A rapid dilution mode is selected, and the coolant in the primary loop of the PWR is started to be diluted at a water adding flow rate of 27 m$^3$·h$^{-1}$. During the dilution, the coolant in the primary loop is sampled and analyzed every 30 minutes to check changes in the boron concentration. The coolant in the pressurizer is sampled and analyzed once every 1 hour to check changes in the boron concentration. The deviation between the boron concentration of the coolant in the primary loop and the boron concentration of the coolant in the pressurizer is checked once every 1 hour. If the absolute value of the deviation of the boron concentrations exceeds 300 mg·kg$^{-1}$, the dilution flow rate is required to be reduced to 10 m$^3$·h$^{-1}$ before next sampling analysis. After further sampling analysis, if the absolute value of the deviation of the boron concentrations still exceeds 200 mg·kg$^{-1}$, the dilution is stopped until the absolute value of the deviation of the boron concentrations is less than 200 mg·kg$^{-1}$. When a difference between the boron concentration of the coolant in the primary loop and the theoretical boron concentration drops to 200 mg·kg$^{-1}$, the dilution flow is adjusted to 10 m$^3$·h$^{-1}$, the dilution is continued until the reciprocal of the SRC neutron count rate approaches 0.10, and then the dilution is stopped. During the wait for the boron concentration of the coolant in the primary loop to be homogeneous, the critical state of the reactor is analyzed through changes in the reciprocal of the SRC neutron count rate. During the dilution operation, it is to be noted that a theoretical critical boron concentration when the temperature control rod is at step 130 is 1151 mg·kg$^{-1}$, and if the boron concentration of the coolant in the primary loop has reached such value but the reciprocal of the SRC neutron count rate is still greater than 0.1, the dilution is continued until the reciprocal of the SRC neutron count rate is less than or equal to 0.1. In any case, when the boron concentration of the coolant in the primary loop reaches the theoretical critical boron concentration (1079 mg·kg$^{-1}$) corresponding to the temperature control rod being fully inserted into the core, in order to prevent a positive abrupt change in reactivity caused by continuous lifting of the temperature control rod, the dilution must be stopped immediately.

(13) The boron concentration of the coolant in the primary loop is waited to become homogeneous, and the waiting time is no less than 15 minutes. After the boron concentration of the coolant in the primary loop monitored by a boron meter is stable (amplitude of change within 5 minutes does not exceed 10 mg·kg$^{-1}$), chemical sampling and analysis is conducted on the coolant in the primary loop and the coolant in the pressurizer twice at an interval of 5 minutes. When a deviation in chemical sampling analysis results of the boron concentration of the coolant in the primary loop and the boron concentration of the coolant in the pressurizer does not exceed 20 mg·kg$^{-1}$, it is determined according to the reciprocal of the SRC neutron count rate whether the PWR has reached a critical state. When the reciprocal of the SRC neutron count rate is very small and close to 0, a neutron doubling cycle of the core of the PWR is infinite, and the PWR is considered to have reached the critical state. A specific determination threshold may be, but is not limited to, 0.01.

(14) Further, after the boron concentration of the coolant in the primary loop is homogeneous, if the PWR does not reach the critical state, an operation of lifting the temperature control rod to make the PWR critical is to be performed.

(15) The PWR gradually approaches the critical state in a manner of lifting the temperature control rod by no more than 5 steps each time. A wait for no less than 100 seconds is required after each lifting of the temperature control rod. In this process, there is a need to pay close attention to a monitoring value of the neutron doubling cycle of the core. When the neutron doubling cycle of the core reaches a relatively stable monitoring value in a range of 100 to 300 seconds, it is determined that the PWR has reached a slightly supercritical state. In this case, the neutron fluence rate of the core should be stabilized by inserting down the temperature control rod (1 step/time is recommended) to adjust the PWR to the critical state.

(16) If the PWR still has not reached the critical state after the temperature control rod is lifted to the top position in the core, the temperature control rod is inserted down to the theoretical critical rod position, and after 1 m$^3$ of deionized water is added for dilution, steps (13) and (14) are repeated until the PWR reaches the critical state.

Specifically, if the PWR does not reach the critical state after the dilution is stopped, the temperature control rod is lifted by no more than 5 steps each time. If it is found that the PWR has reached the critical state in the process of lifting the temperature control rod, the lifting of the temperature control rod is stopped, and the temperature control rod is used to adjust the neutron fluence rate of the core to keep the PWR in a stable critical state. If the rod position of the temperature control rod has been lifted from step 130 to step 225 but the PWR has not reached the critical state, the temperature control rod is inserted down to step 130, and then 1 m$^3$ of deionized water is injected into a primary loop coolant system of the PWR for dilution. After a wait for a long enough time to make the boron concentration of the coolant in the primary loop homogeneous and stable, the critical state of the PWR is determined again by observing the reciprocal of the SRC neutron count rate. If the PWR is still not critical, the PWR can be made critical by lifting the temperature control rod again.

In the embodiment, the high flow dilution is equivalent to dilution at the first dilution flow rate, the medium flow dilution is equivalent to dilution at the second dilution flow rate, and the low flow dilution is equivalent to dilution at the third dilution flow rate.

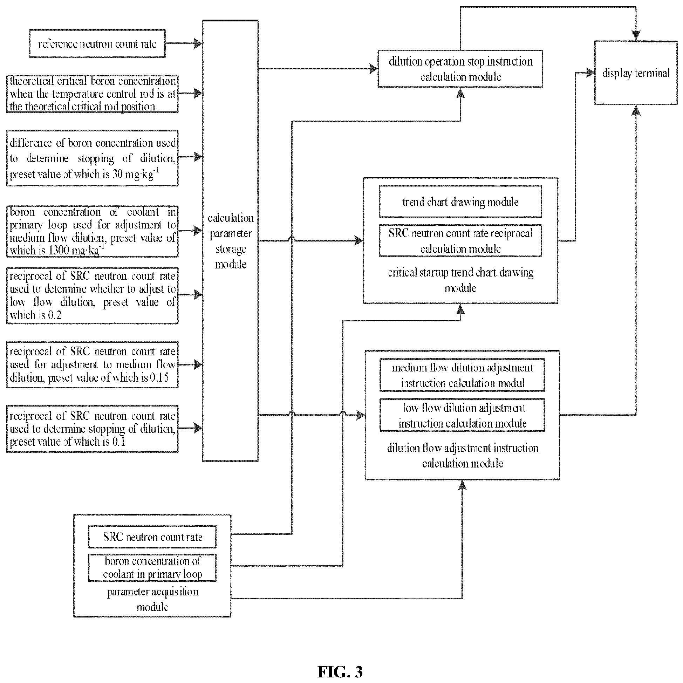

In an embodiment, for example, a method for controlling a PWR is applied to a system for controlling a PWR. The system can automatically draw a trend chart of a boron concentration of a coolant in a primary loop and a reciprocal of an SRC neutron count rate in a critical startup process and automatically generate a dilution flow rate adjustment instruction and a dilution operation stop instruction. As shown in FIG. 3, the system includes:

a parameter acquisition module, configured to acquire an SRC neutron count rate and a boron concentration of a coolant in a primary loop;
a calculation parameter storage module, configured to store a reference neutron count rate, a theoretical critical boron concentration when a temperature control rod is at a theoretical critical rod position, a difference of boron concentrations used to determine stopping of dilution (a difference between the boron concentration of the coolant in the primary loop and the theoretical critical boron concentration when the temperature control rod is at the theoretical critical rod position, a preset value of which is 30 $mg \cdot kg^{-1}$), a boron concentration of the coolant in the primary loop used for adjustment to medium flow dilution (a preset value is 1300 $mg \cdot kg^{-1}$), a reciprocal of the SRC neutron count rate used to determine whether low flow dilution is required (a preset value is 0.2), a reciprocal of the SRC neutron count rate used for adjustment to low flow dilution (a preset value is 0.15), and a reciprocal of the SRC neutron count rate used to determine stopping dilution (a preset value is 0.1);
an SRC neutron count rate reciprocal calculation module, configured to calculate the reciprocal of the SRC neutron count rate;
a medium flow dilution adjustment instruction calculation module, configured to generate a medium flow dilution adjustment instruction when the boron concentration of the coolant in the primary loop drops to a value equal to a preset boron concentration threshold for adjustment from high flow dilution to medium flow dilution;
a low flow dilution adjustment instruction calculation module, configured to calculate, if the critical startup process is suitable for adjustment from medium flow dilution to low flow dilution, a difference between the boron concentration of the coolant in the primary loop and a preset boron concentration of the coolant in the primary loop used to adjust a dilution flow rate, and trigger a low flow dilution adjustment instruction when the difference is 0;
a critical startup trend chart drawing module, configured to draw a critical startup trend chart with the boron concentration of the coolant in the primary loop as the abscissa and the reciprocal of the SRC neutron count rate as the ordinate;
a dilution operation stop instruction calculation module, configured to perform logical voting based on a set dilution operation stop condition, and trigger a dilution operation stop instruction when a switching signal generated by the logical voting is 1; and
a display terminal configured to display the critical startup trend chart, dilution flow rate adjustment instructions, and the dilution operation stop instruction.

It should be understood that, although the steps in the flowcharts involved in the embodiments as described above are displayed in sequence as indicated by the arrows, the steps are not necessarily performed in the order indicated by the arrows. Unless otherwise clearly specified herein, the steps are performed without any strict sequence limitation, and may be performed in other orders. In addition, at least some steps in the flowcharts involved in the embodiments as described above may include a plurality of steps or a plurality of stages, and such steps or stages are not necessarily performed at a same moment, and may be performed at different moments. The steps or stages are not necessarily performed in sequence, and the steps or stages and at least some of other steps or steps or stages of other steps may be performed in turn or alternately.

In the embodiment, the high flow dilution is equivalent to dilution at the first dilution flow rate, the medium flow dilution is equivalent to dilution at the second dilution flow rate, and the low flow dilution is equivalent to dilution at the third dilution flow rate.

Based on a same inventive concept, embodiments of the present application further provide a device for controlling a PWR to implement the method for controlling the PWR as referred to above. The implementation solution provided by the device to solve the problem is similar to the implementation solution described in the above method. Therefore, specific limitations in one or more embodiments directed to the device for controlling the PWR provided below may be obtained with reference to the limitations on the method for controlling the PWR above. Details are not described herein.

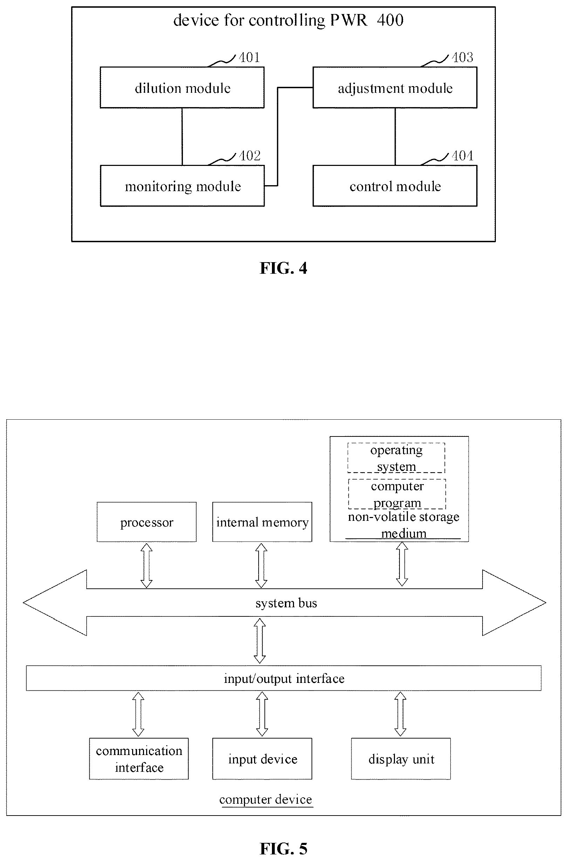

In an embodiment, as shown in FIG. 4, a device 400 for controlling a PWR is provided, including: a dilution module 401, a monitoring module 402, an adjustment module 403, and a control module 404.

The dilution module 401 is configured to: if the PWR is eligible for a dilution operation, perform the dilution operation on the PWR according to a first dilution flow rate.

The monitoring module 402 is configured to continuously monitor a boron concentration of a coolant in a primary loop of the PWR, and continuously monitor a reciprocal of a neutron count rate of the PWR through an SRC of the PWR.

The adjustment module 403 is configured to: during the dilution operation, adjust the first dilution flow rate at least once according to the degree of reduction of the boron concentration of the coolant in the primary loop and the reciprocal of the neutron count rate.

The control module 404 is configured to: if the boron concentration of the coolant in the primary loop meets a first preset condition, stop the dilution operation; and if the boron concentration of the coolant in the primary loop meets a second preset condition, select an operation mode for controlling the PWR according to the reciprocal of the neutron count rate.

In an embodiment, the monitoring module 402 is further configured to: when the boron concentration of the coolant in the primary loop is greater than a reference concentration threshold, acquire a first reference neutron count rate through the SRC of the PWR; continuously monitor a real-time neutron count rate of the PWR through the SRC of the PWR, and continuously calculate the reciprocal of the neutron count rate according to the real-time neutron count rate and the first reference neutron count rate; and when the boron concentration of the coolant in the primary loop is no greater than the reference concentration threshold, stop the dilution operation, and acquire a second reference neutron count rate through the SRC of the PWR; and continue the dilution operation, continuously monitor the real-time neutron count rate of the PWR through the SRC of the PWR, and continuously calculate the reciprocal of the neutron count rate according to the real-time neutron count rate and the second reference neutron count rate.

In an embodiment, the adjustment module 403 is further configured to: if the boron concentration of the coolant in the primary loop drops to a first concentration threshold, reduce the first dilution flow rate to obtain a second dilution flow rate; and if the reciprocal of the SRC neutron count rate is no less than a first reciprocal threshold, continue the dilution operation on the PWR according to the second dilution flow rate.

In an embodiment, the adjustment module 403 is further configured to: if the reciprocal of the SRC neutron count rate is less than the first reciprocal threshold, continue the dilution operation on the PWR according to the second dilution flow rate, and continuously acquire the reciprocal of the SRC neutron count rate; if the reciprocal of the SRC neutron count rate is no greater than a second reciprocal threshold, reduce the second dilution flow rate to obtain a third dilution flow rate, the second reciprocal threshold being less than the first reciprocal threshold, and continue the dilution operation on the PWR according to the third dilution flow rate.

In an embodiment, the control module 404 is further configured to: if a difference between the boron concentration of the coolant in the primary loop and the theoretical critical boron concentration of the PWR is no greater than a second concentration threshold, stop the dilution operation; wait for the boron concentration of the coolant in the primary loop to be homogeneous, and if an amplitude of change of the boron concentration of the coolant in the primary loop within a preset time period is no greater than an amplitude threshold, determine according to the reciprocal of the SRC neutron count rate whether the PWR reaches a critical state; and if the PWR reaches the critical state, control a temperature control rod to stabilize a neutron fluence rate of a core of the PWR.

In an embodiment, the control module 404 is further configured to: if the reciprocal of the SRC neutron count rate is no greater than a third reciprocal threshold, stop the dilution operation; the third reciprocal threshold being less than the second reciprocal threshold.

In an embodiment, the control module 404 is further configured to: if the reciprocal of the SRC neutron count rate is less than a fourth reciprocal threshold, determine that the PWR reaches the critical state; and if the reciprocal of the SRC neutron count rate is no less than the fourth reciprocal threshold, determine that the PWR does not reach the critical state; the fourth reciprocal threshold being less than the third reciprocal threshold.

In an embodiment, the control module 404 is further configured to: if the PWR does not reach the critical state, lift the temperature control rod towards a top position of the core at least once, with a preset number of steps each time; during the lifting of the temperature control rod, continuously determine according to the reciprocal of the SRC neutron count rate whether the PWR reaches the critical state during the lifting of the temperature control rod; and if the PWR reaches the critical state during the lifting of the temperature control rod, control the temperature control rod to stabilize the neutron fluence rate of the core of the PWR.

In an embodiment, the control module 404 is further configured to: if the PWR does not reach the critical state during the lifting of the temperature control rod, control the temperature control rod to be inserted down to a theoretical critical rod position; and perform a supplementary dilution operation on the PWR by using a preset volume of deionized water, and go back to the step of waiting for the boron concentration of the coolant in the primary loop to be homogeneous.

Each module in the above device for controlling the PWR may be implemented entirely or partially by software, hardware, or a combination thereof. The foregoing modules may be built in or independent of a processor of a computer device in a form of hardware, or may be stored in a memory of the computer device in a form of software, so that the processor invokes and performs an operation corresponding to each of the foregoing modules.

In an embodiment, a computer device is provided. The computer device may be a terminal. An internal structure diagram thereof may be shown in FIG. 5. The computer device includes a processor, a memory, an input/output interface, a communication interface, a display unit, and an input device. The processor, the memory, and the input/output interface are connected through a system bus. The communication interface, the display unit, and the input device are connected to the system bus through the input/output interface. The processor of the computer device is configured to provide computing and control capabilities. The memory of the computer device includes a non-volatile storage medium and an internal memory. The non-volatile storage medium stores an operating system and a computer program. The internal memory provides an environment for running of the operating system and the computer program in the non-volatile storage medium. The input/output interface of the computer device is used to exchange information between the processor and an external device. The communication interface of the computer device is used to communicate with an external terminal in a wired or wireless manner. The wireless manner may be implemented by WIFI, a mobile cellular network, near field communication (NFC), or other technologies. The computer program is executed by the processor to implement a method for controlling a PWR. The display unit of the computer device is configured to form a visually visible picture, which may be a display screen, a projection device, or a virtual reality imaging device. The display screen may be a liquid crystal display screen or an e-ink display screen. The input device of the computer device may be a touch layer covering the display screen, or may be a button, a trackball, or a touchpad disposed on a housing of the computer device, or may be an external keyboard, an external touchpad, an external mouse, or the like.

Those skilled in the art may understand that the structure shown in FIG. 5 is merely a block diagram of a partial structure related to a solution in the present application, and does not constitute a limitation to the computer device to which the solution in the present application is applied. Specifically, the computer device may include more or fewer components than those shown in the figure, or have some components combined, or have a different component deployment.

In an embodiment, a computer device is provided, including a memory and a processor. The memory stores a computer program. The processor, when executing the computer program, implements the following steps: if a PWR is eligible for a dilution operation, performing the dilution operation on the PWR according to a first dilution flow rate; continuously monitoring a boron concentration of a coolant in a primary loop of the PWR, and continuously monitoring a reciprocal of a neutron count rate of the PWR through an SRC of the PWR;

during the dilution operation, adjusting the first dilution flow rate at least once according to the degree of reduction of the boron concentration of the coolant in the primary loop and the reciprocal of the SRC neutron count rate; and if the boron concentration of the coolant in the primary loop meets a first preset condition, stopping the dilution operation, and if the boron concentration of the coolant in the primary loop meets a second preset condition, selecting an operation mode for controlling the PWR according to the reciprocal of the SRC neutron count rate.

In an embodiment, the processor, when executing the computer program, further implements the following steps: when the boron concentration of the coolant in the primary loop is greater than a reference concentration threshold, acquiring a first reference neutron count rate through the SRC of the PWR; and continuously monitoring a real-time neutron count rate of the PWR through the SRC of the PWR, and continuously calculating the reciprocal of the neutron count rate according to the real-time neutron count rate and the first reference neutron count rate; and when the boron concentration of the coolant in the primary loop is no greater than the reference concentration threshold, stopping the dilution operation, and acquiring a second reference neutron count rate through the SRC of the PWR; and continuing the dilution operation, continuously monitoring the real-time neutron count rate of the PWR through the SRC of the PWR, and continuously calculating the reciprocal of the neutron count rate according to the real-time neutron count rate and the second reference neutron count rate.

In an embodiment, the processor, when executing the computer program, further implements the following steps: if the boron concentration of the coolant in the primary loop drops to a first concentration threshold, reducing the first dilution flow rate to obtain a second dilution flow rate; and if the reciprocal of the SRC neutron count rate is no less than a first reciprocal threshold, continuing the dilution operation on the PWR according to the second dilution flow rate.

In an embodiment, the processor, when executing the computer program, further implements the following steps: if the reciprocal of the SRC neutron count rate is less than the first reciprocal threshold, continuing the dilution operation on the PWR according to the second dilution flow rate, and continuously acquiring the reciprocal of the SRC neutron count rate; if the reciprocal of the SRC neutron count rate is no greater than a second reciprocal threshold, reducing the second dilution flow rate to obtain a third dilution flow rate, the second reciprocal threshold being less than the first reciprocal threshold; and continuing the dilution operation on the PWR according to the third dilution flow rate.

In an embodiment, the processor, when executing the computer program, further implements the following steps: if a difference between the boron concentration of the coolant in the primary loop and a theoretical critical boron concentration of the PWR is no greater than a second concentration threshold, stopping the dilution operation; waiting for the boron concentration of the coolant in the primary loop to be homogeneous, and if an amplitude of change of the boron concentration of the coolant in the primary loop within a preset time period is no greater than an amplitude threshold, determining according to the reciprocal of the SRC neutron count rate whether the PWR reaches a critical state; and if the PWR reaches the critical state, controlling a temperature control rod to stabilize a neutron fluence rate of a core of the PWR.

In an embodiment, the processor, when executing the computer program, further implements the following steps: if the reciprocal of the SRC neutron count rate is no greater than a third reciprocal threshold, stopping the dilution operation; the third reciprocal threshold being less than the second reciprocal threshold.

In an embodiment, the processor, when executing the computer program, further implements the following steps: if the reciprocal of the SRC neutron count rate is less than a fourth reciprocal threshold, determining that the PWR reaches the critical state; and if the reciprocal of the SRC neutron count rate is no less than the fourth reciprocal threshold, determining that the PWR does not reach the critical state; the fourth reciprocal threshold being less than the third reciprocal threshold.

In an embodiment, the processor, when executing the computer program, further implements the following steps: if the PWR does not reach the critical state, lifting the temperature control rod towards a top position in the core at least once, with a preset number of steps each time; during the lifting of the temperature control rod, continuously determining according to the reciprocal of the SRC neutron count rate whether the PWR reaches the critical state during the lifting of the temperature control rod; and if the PWR reaches the critical state during the lifting of the temperature control rod, controlling the temperature control rod to stabilize the neutron fluence rate of the core of the PWR.

In an embodiment, the processor, when executing the computer program, further implements the following steps: if the PWR does not reach the critical state during the lifting of the temperature control rod, controlling the temperature control rod to be inserted down to a theoretical critical rod position; and performing a supplementary dilution operation on the PWR by using a preset volume of deionized water, and going back to the step of waiting for the boron concentration of the coolant in the primary loop to be homogeneous.

In an embodiment, a computer-readable storage medium is provided, having a computer program stored thereon. The computer program, when executed by the processor, implements the following steps: if a PWR is eligible for a dilution operation, performing the dilution operation on the PWR according to a first dilution flow rate; continuously monitoring a boron concentration of a coolant in a primary loop of the PWR, and continuously monitoring a reciprocal of a neutron count rate of the PWR through an SRC of the PWR; during the dilution operation, adjusting the first dilution flow rate at least once according to the degree of reduction of the boron concentration of the coolant in the primary loop and the reciprocal of the SRC neutron count rate; and if the boron concentration of the coolant in the primary loop meets a first preset condition, stopping the dilution operation, and if the boron concentration of the coolant in the primary loop meets a second preset condition, selecting an operation mode for controlling the PWR according to the reciprocal of the SRC neutron count rate.

In an embodiment, the computer program, when executed by the processor, further implements the following steps: when the boron concentration of the coolant in the primary loop is greater than a reference concentration threshold, acquiring a first reference neutron count rate through the SRC of the PWR; and continuously monitoring a real-time neutron count rate of the PWR through the SRC of the PWR, and continuously calculating the reciprocal of the neutron count rate according to the real-time neutron count rate and the first reference neutron count rate; and when the boron concentration of the coolant in the primary loop is no greater than the reference concentration threshold, stopping the dilution operation, and acquiring a second reference neutron count rate through the SRC of the PWR; and continuing the dilution operation, continuously monitoring the real-time neutron count rate of the PWR through the SRC of the PWR, and continuously calculating the reciprocal of the neutron count rate according to the real-time neutron count rate and the second reference neutron count rate.

In an embodiment, the computer program, when executed by the processor, further implements the following steps: if the boron concentration of the coolant in the primary loop drops to a first concentration threshold, reducing the first dilution flow rate to obtain a second dilution flow rate; and if the reciprocal of the SRC neutron count rate is no less than a first reciprocal threshold, continuing the dilution operation on the PWR according to the second dilution flow rate.

In an embodiment, the computer program, when executed by the processor, further implements the following steps: if the reciprocal of the SRC neutron count rate is less than the first reciprocal threshold, continuing the dilution operation on the PWR according to the second dilution flow rate, and continuously acquiring the reciprocal of the SRC neutron count rate; if the reciprocal of the SRC neutron count rate is no greater than a second reciprocal threshold, reducing the second dilution flow rate to obtain a third dilution flow rate, the second reciprocal threshold being less than the first reciprocal threshold; and continuing the dilution operation on the PWR according to the third dilution flow rate.

In an embodiment, the computer program, when executed by the processor, further implements the following steps: if a difference between the boron concentration of the coolant in the primary loop and a theoretical critical boron concentration of the PWR is no greater than a second concentration threshold, stopping the dilution operation; waiting for the boron concentration of the coolant in the primary loop to be homogeneous, and if an amplitude of change of the boron concentration of the coolant in the primary loop within a preset time period is no greater than an amplitude threshold, determining according to the reciprocal of the SRC neutron count rate whether the PWR reaches a critical state; and if the PWR reaches the critical state, controlling a temperature control rod to stabilize a neutron fluence rate of a core of the PWR.

In an embodiment, the computer program, when executed by the processor, further implements the following steps: if the reciprocal of the SRC neutron count rate is no greater than a third reciprocal threshold, stopping the dilution operation; the third reciprocal threshold being less than the second reciprocal threshold.

In an embodiment, the computer program, when executed by the processor, further implements the following steps: if the reciprocal of the SRC neutron count rate is less than a fourth reciprocal threshold, determining that the PWR reaches the critical state; and if the reciprocal of the SRC neutron count rate is no less than the fourth reciprocal threshold, determining that the PWR does not reach the critical state; the fourth reciprocal threshold being less than the third reciprocal threshold.

In an embodiment, the computer program, when executed by the processor, further implements the following steps: if the PWR does not reach the critical state, lifting the temperature control rod towards a top position in the core at least once, with a preset number of steps each time; during the lifting of the temperature control rod, continuously determining according to the reciprocal of the SRC neutron count rate whether the PWR reaches the critical state during the lifting of the temperature control rod; and if the PWR reaches the critical state during the lifting of the temperature control rod, controlling the temperature control rod to stabilize the neutron fluence rate of the core of the PWR.

In an embodiment, the computer program, when executed by the processor, further implements the following steps: if the PWR does not reach the critical state during the lifting of the temperature control rod, controlling the temperature control rod to be inserted down to a theoretical critical rod position; and performing a supplementary dilution operation on the PWR by using a preset volume of deionized water, and going back to the step of waiting for the boron concentration of the coolant in the primary loop to be homogeneous.

In an embodiment, a computer program product is provided, including a computer program. The computer program, when executed by a processor, implements steps of each method according to the foregoing embodiments.

It is to be noted that user information (including, but not limited, to user equipment information, user personal information, and the like) and data (including, but not limited to, data for analysis, stored data, displayed data, and the like) involved in the present application are all authorized by the user or information and data fully authorized by all parties, and collection, use and processing of relevant data are required to comply with relevant laws, regulations, and standards of relevant countries and regions.

Those of ordinary skill in the art may understand that all or some of procedures of the method in the foregoing embodiments may be implemented by a computer program instructing relevant hardware. The computer program may be stored in a non-volatile computer-readable storage medium. When the computer program is executed, the procedures of the foregoing method embodiments may be implemented. Any reference to a memory, storage, a database, or another medium used in the embodiments provided the present application may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM) or an external cache. By way of description and not limitation, the RAM may be in various forms, such as a static random access memory (SRAM), a dynamic random access memory (DRAM), or the like. The database as referred to in the embodiments provided in the present application may include at least one of a relational database and a non-relational database. The non-relational database may include a blockchain-based distributed database, but is not limited thereto. The processor as referred to in the embodiments provided in the present application may be a general-purpose processor, a central processing unit, a graphics processor, a digital signal processor, a programmable logic device, a data processing logic device based on quantum computing, or the like, but is not limited thereto.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be defined by the appended claims.

## Claims

1. A method for controlling a pressurized water reactor, PWR, **characterized by** comprising:

   if the PWR is eligible for a dilution operation, performing the dilution operation on the PWR according to a first dilution flow rate; continuously monitoring a boron concentration of a coolant in a primary loop of the PWR, and continuously monitoring a reciprocal of a neutron count rate of the PWR through a source range channel, SRC, of the PWR; during the dilution operation, adjusting the first dilution flow rate at least once according to degree of reduction of the boron concentration of the coolant in the primary loop and the reciprocal of the neutron count rate; and if the boron concentration of the coolant in the primary loop meets a first preset condition, stopping the dilution operation; and if the boron concentration of the coolant in the primary loop meets a second preset condition, selecting an operation mode for controlling the PWR according to the reciprocal of the neutron count rate.

2. The method according to claim 1, wherein the continuously monitoring the reciprocal of the neutron count rate of the PWR through the SRC of the PWR comprises:

   when the boron concentration of the coolant in the primary loop is greater than a reference concentration threshold, acquiring a first reference neutron count rate through the SRC of the PWR; and continuously monitoring a real-time neutron count rate of the PWR through the SRC of the PWR, and continuously calculating the reciprocal of the neutron count rate according to the real-time neutron count rate and the first reference neutron count rate; and when the boron concentration of the coolant in the primary loop is no greater than the reference concentration threshold, stopping the dilution operation, and acquiring a second reference neutron count rate through the SRC of the PWR; and continuing the dilution operation, continuously monitoring the real-time neutron count rate of the PWR through the SRC of the PWR, and continuously calculating the reciprocal of the neutron count rate according to the real-time neutron count rate and the second reference neutron count rate.

3. The method according to claim 1, wherein the during the dilution operation, adjusting the first dilution flow rate at least once according to the degree of reduction of the boron concentration of the coolant in the primary loop and the reciprocal of the neutron count rate comprises:

   if the boron concentration of the coolant in the primary loop drops to a first concentration threshold, reducing the first dilution flow rate to obtain a second dilution flow rate; and if the reciprocal of the neutron count rate is no less than a first reciprocal threshold, continuing the dilution operation on the PWR according to the second dilution flow rate.

4. The method according to claim 3, further comprising:

   if the reciprocal of the neutron count rate is less than the first reciprocal threshold, continuing the dilution operation on the PWR according to the second dilution flow rate, and continuously acquiring the reciprocal of the neutron count rate; if the reciprocal of the neutron count rate is no greater than a second reciprocal threshold, reducing the second dilution flow rate to obtain a third dilution flow rate, the second reciprocal threshold being less than the first reciprocal threshold; and continuing the dilution operation on the PWR according to the third dilution flow rate.

5. The method according to claim 1, wherein the if the boron concentration of the coolant in the primary loop meets the first preset condition, stopping the dilution operation, and if the boron concentration of the coolant in the primary loop meets the second preset condition, selecting the operation mode for controlling the PWR according to the reciprocal of the neutron count rate comprises:

   if a difference between the boron concentration of the coolant in the primary loop and a theoretical critical boron concentration of the PWR is no greater than a second concentration threshold, stopping the dilution operation; waiting for the boron concentration of the coolant in the primary loop to be homogeneous, and if an amplitude of change of the boron concentration of the coolant in the primary loop within a preset time period is no greater than an amplitude threshold, determining according to the reciprocal of the neutron count rate whether the PWR reaches a critical state; and if the PWR reaches the critical state, controlling a temperature control rod to stabilize a neutron fluence rate of a core of the PWR.

**6.** The method according to any one of claims 1 to 5, further comprising:
if the reciprocal of the neutron count rate is no greater than a third reciprocal threshold, stopping the dilution operation, the third reciprocal threshold being less than the second reciprocal threshold.

**7.** The method according to claim 5, wherein the determining according to the reciprocal of the neutron count rate whether the PWR reaches the critical state comprises:

if the reciprocal of the neutron count rate is less than a fourth reciprocal threshold, determining that the PWR reaches the critical state; and
if the reciprocal of the neutron count rate is no less than the fourth reciprocal threshold, determining that the PWR does not reach the critical state;
wherein the fourth reciprocal threshold is less than a third reciprocal threshold.

**8.** The method according to claim 5, further comprising:

if the PWR does not reach the critical state, lifting the temperature control rod towards a top position in the core at least once, with a preset number of steps each time;
during the lifting of the temperature control rod, continuously determining according to the reciprocal of the neutron count rate whether the PWR reaches the critical state during the lifting of the temperature control rod; and
if the PWR reaches the critical state during the lifting of the temperature control rod, controlling the temperature control rod to stabilize the neutron fluence rate of the core of the PWR.

**9.** The method according to claim 8, further comprising:

if the PWR does not reach the critical state during the lifting of the temperature control rod, controlling the temperature control rod to be inserted down to a theoretical critical rod position; and
performing a supplementary dilution operation on the PWR by using a preset volume of deionized water, and going back to the step of waiting for the boron concentration of the coolant in the primary loop to be homogeneous.

**10.** A device for controlling a pressurized water reactor, PWR, **characterized by** comprising:

a dilution module, configured to: if the PWR is eligible for a dilution operation, perform the dilution operation on the PWR according to a first dilution flow rate;
a monitoring module, configured to continuously monitor a boron concentration of a coolant in a primary loop of the PWR, and continuously monitor a reciprocal of a neutron count rate of the PWR through a source range channel, SRC, of the PWR;
an adjustment module, configured to: during the dilution operation, adjust the first dilution flow rate at least once according to degree of reduction of the boron concentration of the coolant in the primary loop and the reciprocal of the neutron count rate; and
a control module, configured to: if the boron concentration of the coolant in the primary loop meets a first preset condition, stop the dilution operation, and if the boron concentration of the coolant in the primary loop meets a second preset condition, select an operation mode for controlling the PWR according to the reciprocal of the neutron count rate.

if a PWR is eligible for a dilution operation, perform the dilution operation on the PWR according to a first dilution flow rate

／102

continuously monitor the boron concentration of coolant in a primary loop of the PWR, and continuously monitor the reciprocal of the neutron count rate of the PWR through an SRC of the PWR

／104

during the dilution operation, adjust the first dilution flow rate at least once according to the degree of reduction of the boron concentration of coolant in the primary loop and the reciprocal of the neutron count rate

／106

if the boron concentration of coolant in the primary loop meets a first preset condition, stop the dilution operation, and if the boron concentration of coolant in the primary loop meets a second preset condition, select an operation mode for controlling the PWR according to the reciprocal of the neutron count rate

／108

**FIG. 1**

**FIG. 2**

EP 4 586 277 A1

FIG. 3

**FIG. 4**

**FIG. 5**

## INTERNATIONAL SEARCH REPORT

| International application No. |
|---|
| **PCT/CN2022/127715** |

**A.    CLASSIFICATION OF SUBJECT MATTER**

G21C7/36(2006.01)i;G21C17/022(2006.01)i

According to International Patent Classification (IPC) or to both national classification and IPC

**B.    FIELDS SEARCHED**

Minimum documentation searched (classification system followed by classification symbols)

IPC:G21C

Documentation searched other than minimum documentation to the extent that such documents are included in the fields searched

Electronic data base consulted during the international search (name of data base and, where practicable, search terms used)

CNTXT; CNKI; WPABSC; ENTXTC; WPABS; ENTXT; 读秀, DUXIU: 压水反应堆, 中子计数, 硼浓度, 临界, 快速, 稀释, 慢速, 源量程通道, PWR, pressurized water reactor, neutron count+, critical, fast, slow, SRC, source range channel

**C.    DOCUMENTS CONSIDERED TO BE RELEVANT**

| Category* | Citation of document, with indication, where appropriate, of the relevant passages | Relevant to claim No. |
|---|---|---|
| PX | CN 115240878 A (CHINA NUCLEAR POWER ENGINEERING CO., LTD. et al.) 25 October 2022 (2022-10-25)<br>claims 1-10 | 1-10 |
| X | 郑军伟 等 (ZHENG, Junwei et al.). "压水堆核电机组反应堆首次临界启动研究 (Study on Initial Critical Start-up of Pressurized Water Reactor Nuclear Power Unit)"<br>自动化仪表 (Process Automation Instrumentation),<br>Vol. 42, No. S1, 30 August 2021 (2021-08-30), pages 266-269<br>ISSN: 1000-0380,<br>pages 268-269 | 1-10 |
| X | 罗璋琳 等 (LUO, Zhanglin et al.). "压水动力堆物理实验 (Non-official translation: Pressurized Water Power Reactor Physics Experiment)"<br>实验反应堆物理导论 (Introduction to Experimental Reactor Physics),<br>28 February 2011 (2011-02-28), pages 313-316<br>pages 313-314 | 1-10 |
| A | CN 110033871 A (GUANGDONG NUCLEAR POWER JOINT VENTURE et al.) 19 July 2019 (2019-07-19)<br>entire document | 1-10 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 April 2023** | **29 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

International application No.

**PCT/CN2022/127715**

### C.    DOCUMENTS CONSIDERED TO BE RELEVANT

| Category* | Citation of document, with indication, where appropriate, of the relevant passages | Relevant to claim No. |
|---|---|---|
| A | CN 111403058 A (GUANGXI FANGCHENGGANG NUCLEAR POWER CO., LTD.) 10 July 2020 (2020-07-10)<br>    entire document | 1-10 |
| A | CN 111799000 A (JIANGSU NUCLEAR POWER CORP. et al.) 20 October 2020 (2020-10-20)<br>    entire document | 1-10 |
| A | CN 113345605 A (GUANGXI FANGCHENGGANG NUCLEAR POWER CO., LTD.) 03 September 2021 (2021-09-03)<br>    entire document | 1-10 |

**INTERNATIONAL SEARCH REPORT**
Information on patent family members

International application No.

**PCT/CN2022/127715**

| Patent document cited in search report | | | Publication date (day/month/year) | Patent family member(s) | Publication date (day/month/year) |
|---|---|---|---|---|---|
| CN | 115240878 | A | 25 October 2022 | None | |
| CN | 110033871 | A | 19 July 2019 | None | |
| CN | 111403058 | A | 10 July 2020 | None | |
| CN | 111799000 | A | 20 October 2020 | None | |
| CN | 113345605 | A | 03 September 2021 | None | |

Form PCT/ISA/210 (patent family annex) (July 2022)

**EP 4 586 277 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202211083771